# DEMANDE DE BREVET EUROPEEN

(11) **EP 1 059 228 A1**
(43) Date de publication de la demande: **13.12.2000**
(21) Numéro de dépôt: 00420115.8
(22) Date de dépôt: 06.06.2000
(51) Int. Cl.: B63B 21/08, F16G 11/10

(54) **Dispositif bloqueur de cordage**

(30) Priorité: 07.06.1999 FR 9907367
(71) Demandeur: WICHARD, 63300 Thiers (FR)
(72) Inventeur: Mihailovic, Pierre, 63122 Manson (FR)
(74) Mandataire: Maureau, Philippe

(57) **Abrégé**

Ce dispositif (1) comprend un premier et un second organes de serrage (3, 4) du cordage (5), entre lesquels ce cordage (5) est engagé, au moins un de ces organes (3, 4) étant mobile entre une position de verrouillage, dans laquelle il serre le cordage (5) entre lui et l'autre organe (4, 3), et une position de déverrouillage, dans laquelle il n'exerce pas ledit serrage afin d'autoriser le défilement du cordage (5) au travers du dispositif (1).

Selon l'invention,
- le premier de ces deux organes de serrage (3) comprend une surface circulaire autour de laquelle le cordage (5) est enroulé, en amont du deuxième de ces deux organes de serrage (4), sur une fraction de tour correspondant à un angle de plus de 180°, ou sur plusieurs tours, et
- ledit deuxième de ces deux organes de serrage (4) est disposé par rapport audit premier organe de serrage (3) de telle sorte que le serrage du cordage (5) qu'il permet s'effectue au-delà d'une fraction de tour du cordage (5) sur ledit premier organe de serrage (3) correspondant à un angle au moins égal à 180°, ou au-delà d'un enroulement du cordage (5) sur plusieurs tours autour dudit premier organe de serrage (3).

## Description

La présente invention concerne un dispositif bloqueur de cordage permettant, dans un état de verrouillage, de bloquer un cordage subissant une tension en amont du dispositif et, dans un état de déverrouillage, de libérer ce cordage.

Le terme "amont" définit le côté du cordage relié à l'objet devant être mis en tension au moyen de ce cordage, et le terme "aval" définit le côté opposé.

Ce dispositif est en particulier destiné à être utilisé sur les bateaux de plaisance à voiles, pour bloquer divers cordages que comprennent les gréements de ces bateaux, notamment les drisses, mais cette application n'est pas limitative. Le terme "amont" définit alors, dans le cas d'une drisse, le côté du cordage relié à la voile, et le terme "aval" définit le côté par lequel la drisse est destinée à être manoeuvrée au moyen d'un cabestan.

De tels dispositifs bloqueurs de cordage sont connus dans leur principe et sont couramment employés sur des voiliers.

Un dispositif existant, généralement dénommé "taquet coinceur", comprend deux cames pivotantes, rappelées en pivotement l'une vers l'autre et présentant chacune une portion latérale courbe sur son côté tourné vers l'autre came. Le cordage est engagé entre ces cames, à l'encontre de la force de rappel s'exerçant sur ces dernières, et la tension qu'il subit en amont provoque le pivotement des cames dans le sens du serrage du cordage par ces dernières.

Un dispositif de ce type présente certains inconvénients, notamment en ce qui concerne sa résistance limitée à des tensions importantes, la difficulté de largage du cordage en cas d'une telle tension, la nécessité de réintroduire le cordage entre les cames après chaque largage, et l'usure non négligeable générée sur le cordage par le serrage des cames.

Ces inconvénients limitent notablement l'utilisation de ces dispositifs.

Un autre type de dispositif, généralement dénommé "bloqueur à came", comprend un bâti traversé par le cordage et une came à excentrique mobile en pivotement dans ce bâti. La came peut être déplacée entre une position de verrouillage, dans laquelle elle serre le cordage entre elle et le fond du bâti, et une position de déverrouillage, dans laquelle elle est située à distance du cordage et ne fait donc pas obstacle au coulissement de celui-ci au travers du dispositif.

Ce type de dispositif a une résistance supérieure à celle des taquets coinceurs précédemment décrits mais conserve beaucoup d'inconvénients de ceux-ci. En particulier, la manoeuvre de la came peut être rendue très difficile, voire impossible, en cas de tension importante sur le cordage, ce qui oblige à exercer une tension sur ce cordage en aval du dispositif pour équilibrer la tension amont et permettre ainsi de libérer le cordage. L'exercice de cette tension aval implique une manoeuvre supplémentaire, empêchant un largage rapide du cordage dans certaines circonstances d'urgence. En outre, l'usure générée sur le cordage par ce type de dispositif est importante, et le serrage produit est peu efficace avec certaines fibres à haute résistance, dont le coefficient de friction est faible.

Un troisième type de dispositif existant comprend un bâti contenant une série de plaquettes, ces plaquettes étant inclinables et percées de trous. Le cordage est engagé au travers de ces trous et la tension qu'il subit provoque une inclinaison des plaquettes. Cette inclinaison permet aux plaquettes de prendre fortement appui contre le cordage, ce qui assure le coincement de ce dernier.

Ce type de dispositif réduit légèrement l'usure du cordage mais ne remédie pas aux inconvénients précités.

Il est également connu par les documents DE 1 231 et FR 2 753 169 un dispositif bloqueur de cordage comprenant un premier et un second organes de serrage du cordage, entre lesquels ce cordage est engagé. Ledit premier organe de serrage est monté pivotant par rapport au dispositif et comprend une surface circulaire autour de laquelle le cordage peut être engagé, et ledit deuxième organe de serrage est disposé par rapport audit premier organe de serrage de manière à permettre ledit serrage du cordage entre lui et ledit premier organe de serrage. Au moins un de ces organes est mobile entre une position de verrouillage, dans laquelle il serre le cordage entre lui et l'autre organe, et une position de déverrouillage, dans laquelle il n'exerce pas ledit serrage afin d'autoriser le défilement du cordage au travers du dispositif.

Ces dispositifs conservent les inconvénients précités relatifs à la difficulté de largage du cordage en cas de tensionimportante, à l'usure non négligeable générée sur le cordage et au manque d'efficacité de serrage de certains cordages.

La présente invention vise précisément à remédier à ces inconvénients fondamentaux des dispositifs de ce type, en fournissant un dispositif bloqueur de cordage qui permette à la fois un largage facile et rapide du cordage en toutes circonstances, sans obliger à l'exercice d'une tension du cordage en aval du dispositif, un parfait blocage d'un cordage en fibres à faible coefficient de friction, et une usure réduite du cordage.

Le dispositif que l'invention concerne comprend un premier et un second organes de serrage du cordage tels que connus par les documents DE 1 231 et FR 2 753 169 précités.

Selon l'invention,
- le dispositif est conformé de telle sorte que le cordage puisse être enroulé autour dudit premier organe de serrage sur une fraction de tour correspondant à un angle de plus de 180°, ou sur plusieurs tours, et
- ledit deuxième organe de serrage est disposé par rapport audit premier organe de serrage de telle sorte que le serrage du cordage qu'il permet s'effectue au-delà d'une fraction de tour du cordage sur ledit premier organe de serrage correspondant à un angle au moins égal à 180°, ou au-delà d'un enroulement du cordage sur plusieurs tours autour dudit premier organe de serrage.

L'enroulement du cordage sur ledit premier organe de serrage permet de diminuer en grande partie la tension résiduelle subie par le cordage au niveau du deuxième organe de serrage. Le serrage exercé par ce dernier peut donc être réduit en conséquence, ce qui limite l'usure générée sur le cordage ainsi que les forces subies par lesdits organes au niveau de ce serrage. Il en résulte que la manoeuvre du ou des organes de serrage mobiles, en vue de libérer le cordage, est facile, ce qui élimine la nécessité d'opérer une mise en tension du cordage en aval du dispositif pour faciliter, ou pour réaliser, cette libération. En outre, l'enroulement précité du cordage permet une large surface de contact de ce cordage et dudit premier organe de serrage, générant ainsi des frottements importants, qui augmentent avec la tension exercée sur le cordage. Ces frottements s'ajoutent au serrage du cordage, ce qui permet de parfaitement bloquer ce dernier même lorsqu'il est réalisé en fibres à faible coefficient de frottement.

Selon une forme de réalisation simple de l'invention, le ou les organes de serrage mobiles pourraient être déplaçables uniquement par des moyens de manoeuvre à actionnement manuel, par exemple à l'aide d'un levier. Selon une forme de réalisation préférée de cette invention, le dispositif comprend à la fois
- des moyens de manoeuvre à actionnement manuel pour amener le ou les organes de serrage mobiles vers leur position de déverrouillage, ces moyens de manoeuvre permettant de libérer le défilement du cordage ; et
- des moyens permettant le déplacement automatique du ou des organes de serrage mobiles vers ladite position de verrouillage en cas de tension amont supérieure à la tension aval, et le déplacement automatique de ces mêmes organes vers ladite position de déverrouillage en cas de tension aval au moins égale à la tension amont.

Un tel dispositif prévient tout risque de largage incontrôlé du cordage pendant sa manoeuvre.

Selon une possibilité, dans ce cas de déplacement automatique, le deuxième organe de serrage est mobile et est constitué par une came pivotante, cette came pouvant pivoter dans un sens pour venir en prise avec le cordage, lorsque la tension amont est supérieure à la tension aval, et dans le sens inverse pour libérer le cordage, lorsque la tension exercée en aval est au moins égale à la tension exercée en amont.

Selon une autre possibilité dans ce même cas, ledit premier organe de serrage est déplaçable en direction du deuxième organe de serrage lorsque la tension amont est supérieure à la tension aval, et est déplaçable en direction opposée à ce deuxième organe de serrage lorsque la tension exercée en aval est au moins égale à la tension exercée en amont.

Le premier organe de serrage peut être un cylindre transversal ou peut être constitué par un tambour monté rotatif sur un axe. Dans ce deuxième cas, le défilement du cordage au travers du dispositif est facilité par la rotation du tambour, ce qui permet une manoeuvre rapide de libération du cordage.

De préférence, dans ce cas, le dispositif comprend des moyens libérables de blocage de la rotation du tambour dans le sens correspondant à l'exercice d'une tension amont supérieure à la tension aval ; ces moyens peuvent en particulier être constitués par un système de cliquet relié au dispositif et de crans correspondants aménagés sur le tambour.

Avantageusement, dans ce cas, le dispositif comprend des moyens de manoeuvre à actionnement manuel, conformés pour permettre
dans une position de verrouillage du dispositif, de bloquer le cordage en cas de tension amont supérieure à la tension aval,
dans une position de déverrouillage intermédiaire du dispositif, de déplacer ledit deuxième organe de serrage vers sa position de déverrouillage tout en maintenant lesdits moyens libérables de blocage de la rotation du tambour dans une position active, dans laquelle ils bloquent cette rotation, et
dans une position de déverrouillage total du dispositif, de maintenir le deuxième organe de serrage dans sa position de déverrouillage et de déplacer lesdits moyens libérables de blocage de la rotation du tambour dans une position inactive, dans laquelle ils libèrent cette rotation.

Dans ladite position de déverrouillage intermédiaire, le cordage peut défiler en glissant autour du tambour, sans rotation de ce dernier, donc avec des frottements, ce qui correspond à un largage contrôlé du cordage. Dans ladite position de déverrouillage total, la rotation du tambour est libérée, de sorte que ce tambour est entraîné par le défilement du cordage, ce qui correspond à un largage rapide de ce cordage.

Selon une forme de réalisation perfectionnée de l'invention, le deuxième organe de serrage comprend, à distance de sa zone de serrage destinée à venir au contact du cordage, une première partie cylindrique, parallèle à l'axe du tambour, formant ledit cliquet, et, du côté de cette zone de serrage, une deuxième partie cylindrique, également parallèle audit axe ; cette deuxième partie cylindrique est engagée, avec possibilité de pivotement et de coulissement, dans une lumière ; cette lumière est orientée de manière à ce que le déplacement de ladite deuxième partie cylindrique en elle fasse pivoter le deuxième organe de serrage, autour de l'axe de ladite première partie cylindrique, vers sa position de verrouillage, lorsque ce deuxième organe de serrage est entraîné en déplacement curviligne par le tambour, par l'intermédiaire de ladite première partie cylindrique en prise avec l'un des crans du tambour, suite à l'exercice sur le cordage d'une tension amont supérieure à la tension aval.

Le cliquet est ainsi aménagé directement sur le deuxième organe de serrage, et ladite lumière autorise un léger déplacement curviligne de ce deuxième organe de serrage lorsque la tension amont supérieure à la tension aval provoque la rotation du tambour. Ce déplacement curviligne, de par l'orientation de la lumière, permet de déplacer le deuxième organe de serrage vers ce tambour, jusqu'à réaliser le serrage du cordage.

Selon une mise en oeuvre encore perfectionnée de cette forme de réalisation de l'invention :
- le dispositif comprend un bâti sur lequel un levier est monté de manière pivotante, ce levier étant mobile entre des positions de verrouillage, de déverrouillage intermédiaire, et de déverrouillage total correspondant aux positions précitées de verrouillage, de déverrouillage intermédiaire, et de déverrouillage total du dispositif ;
- ladite lumière est aménagée dans ce levier, et permet le déplacement dudit deuxième organe de serrage lorsque le levier est placé dans ladite position de verrouillage, tandis qu'elle est éloignée du tambour lorsque le levier est pivoté vers ladite position de déverrouillage intermédiaire ;
- le bâti du dispositif comprend une surface de came, contre laquelle ladite deuxième partie cylindrique vient porter lors du pivotement du levier vers la position de déverrouillage intermédiaire ; cette surface de came présente une forme courbe et ladite deuxième partie cylindrique coopère avec elle de manière à faire pivoter le deuxième organe de serrage autour de la première partie cylindrique tout en maintenant cette première partie cylindrique en prise avec le cran correspondant du tambour ; et
- le levier comprend un ergot venant porter contre le deuxième organe de serrage lorsque ce levier est déplacé vers ladite position de déverrouillage total, afin de dégager ladite première partie cylindrique hors du cran correspondant du tambour.

Dans la position de verrouillage du levier, la lumière permet le déplacement automatique du deuxième organe de serrage, comme indiqué précédemment. Le pivotement du levier vers ladite position de déverrouillage intermédiaire permet de déplacer cette même lumière à distance du tambour et, par conséquent, de déplacer le deuxième organe de serrage vers sa position de déverrouillage ; ce déplacement s'opère toutefois sans dégagement du cliquet que constitue ladite première partie cylindrique hors du cran correspondant du tambour, du fait de la coopération de ladite deuxième partie cylindrique avec ladite surface de came. Le pivotement du levier vers la position de déverrouillage total provoque le dégagement du cliquet hors du cran du tambour.

Avantageusement, le premier organe de serrage comprend des nervures faisant saillie, radialement vers l'extérieur, de sa face périphérique extérieure, ces nervures permettant d'augmenter les frottements entre le cordage et ce premier organe de serrage.

Les possibilités de glissement du cordage par rapport à ce premier organe de serrage sont ainsi réduites, ce qui favorise le contrôle de la libération dudit cordage.

Avantageusement, le deuxième organe de serrage est formé par l'assemblage de deux pièces, dont une comporte lesdites première et deuxième parties cylindriques et dont l'autre comporte ladite zone de serrage du cordage, des moyens étant prévus pour permettre de placer l'une de ces pièces par rapport à l'autre selon plusieurs positions longitudinales et pour maintenir ces pièces dans une position déterminée.

Le déplacement de l'une de ces pièces par rapport à l'autre permet de régler la position de ladite zone de serrage le long de ce deuxième organe de serrage, et donc d'adapter cette position au diamètre du cordage à bloquer, pour l'obtention d'un serrage optimal de ce cordage.

De préférence, le moyeu du tambour comprend une cavité axiale présentant un profil non circulaire, qui débouche sur l'extérieur du dispositif, cette cavité pouvant recevoir des moyens pour permettre d'entraîner manuellement en rotation ce tambour afin de réaliser une mise en tension totale ou partielle du cordage. Ces moyens peuvent notamment comprendre un système à cliquet, tel qu'un système de cliquet à aiguilles, et une manivelle d'entraînement, en particulier une manivelle de cabestan.

Pour sa bonne compréhension, l'invention est à nouveau décrite ci-dessous en référence au dessin schématique annexé représentant, à titre d'exemples non limitatifs, plusieurs formes de réalisation du dispositif qu'elle concerne.
La figure 1 est une vue partielle, en perspective éclatée, des pièces qui le composent, selon une première forme de réalisation, qui est une forme de réalisation préférentielle ;
la figure 2 en est une vue en perspective et en coupe longitudinale, à l'état monté ;
la figure 3 est une vue en perspective d'une came de serrage qu'il comprend ;
la figure 4 en est une vue de côté, dans une position de deux pièces qui constituent cette came ;
la figure 5 en est une vue similaire à la figure 4, dans une autre position de ces deux pièces ;
les figures 6 à 8 sont des vues de côté du dispositif respectivement dans des positions de verrouillage, de déverrouillage intermédiaire et de déverrouillage total de celui-ci ;
la figure 9 est une vue du dispositif en perspective et en coupe longitudinale, selon une variante ;
la figure 10 est une vue simplifiée, de dessus, du dispositif selon une deuxième forme de réalisation ;
les figures 11 à 13 sont des vues simplifiées, de côté, du dispositif selon une troisième forme de réalisation, respectivement dans des positions de verrouillage, de déverrouillage intermédiaire et de déverrouillage total de celui-ci ;
la figure 14 est une vue en perspective éclatée, avec arrachement, du dispositif selon une quatrième forme de réalisation ;
la figure 15 en est une vue similaire à la figure 14, à l'état monté ;
la figure 16 en est une vue en perspective, et
la figure 17 en est une vue simplifiée, de côté.

Les parties ou éléments qui se retrouvent dans ces différentes formes de réalisation, ou qui sont similaires d'une forme de réalisation à une autre, sont désignés par les mêmes références numériques.

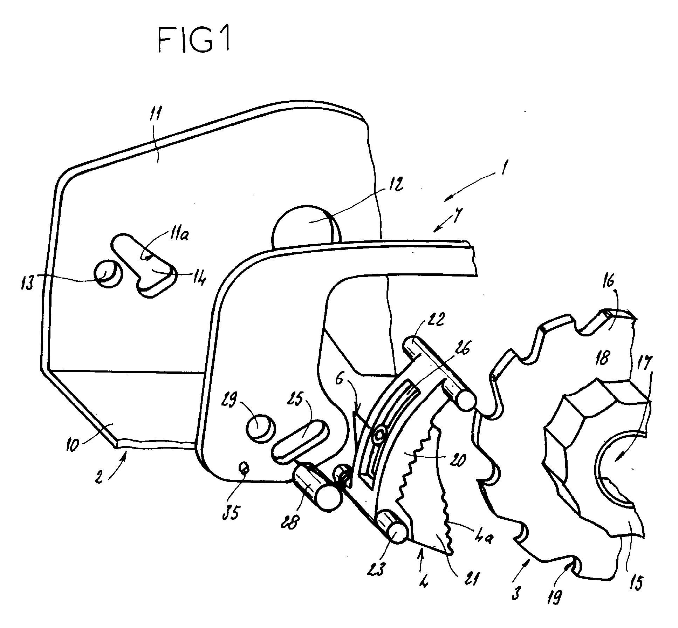

Les figures 1 à 8 représentent sous différents angles un dispositif 1 bloqueur de cordage permettant, dans un état de verrouillage, de bloquer un cordage subissant une tension en amont du dispositif et, dans un état de déverrouillage, de libérer ce cordage.

Ce dispositif 1 comprend un bâti 2, un tambour 3 monté pivotant sur ce bâti 2, une came 4 de serrage du cordage 5 engagé autour du tambour 3, un ressort 6 en épingle et un levier 7 monté pivotant sur le bâti 2.

Ce bâti 2 comprend un fond 10 destiné à être boulonné à une paroi, en particulier le pont d'un voilier, et deux joues latérales 11. Ces joues 11 comprennent, aménagés en regard l'un de l'autre, des trous 12, 13 pour le passage des pièces formant les axes de pivotement du tambour 3 et du levier 7, et deux lumières 14. L'un des bords 11a des joues 11 qui délimitent ces lumières 14 présente une forme courbe, dont la raison d'être sera explicitée plus loin.

Le tambour 3 comprend un moyeu 15 et deux flasques 16. Le moyeu 15 délimite une cavité axiale 17 recevant la pièce cylindrique (non représentée) formant son pivot, et la face périphérique extérieure de ce moyeu 15 présente des nervures 18 faisant saillie radialement vers l'extérieur, conformées pour créer des frottements avec le cordage 5. Les flasques 16 présentent quant à eux des crans 19 aménagés dans leur bord périphérique, conformés pour coopérer avec un cliquet décrit plus loin, afin de bloquer la rotation du tambour 3 dans le sens de rotation des aiguilles d'une montre, dans l'exemple représenté, ce sens de rotation correspondant à l'exercice sur le cordage 5 d'une tension en amont du dispositif 1 supérieure à la tension exercée en aval de ce même dispositif.

La came de serrage 4 s'étend le long d'un côté du tambour 3, et comprend une zone 4a de serrage du cordage 5. Cette zone 4a est située au-delà d'un arc d'enroulement de ce cordage 5 sur ce tambour 3 qui correspond à un angle de plus de 270°.

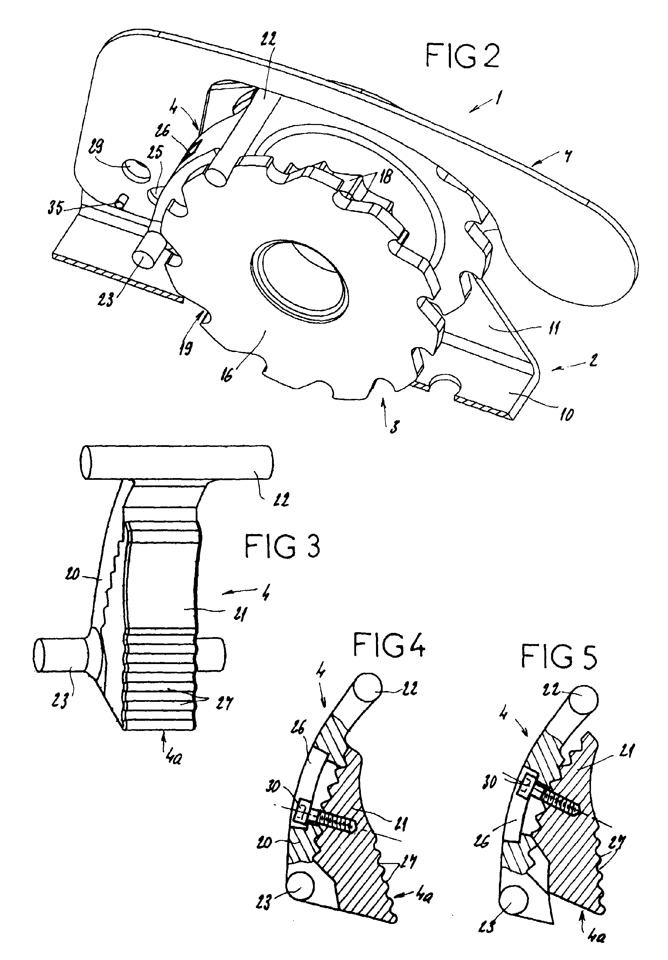

La came 4 est constituée par l'assemblage de deux pièces 20, 21, plus particulièrement représentées aux figures 3 à 5. La pièce 20 située radialement sur l'extérieur de cette came 4 par rapport au tambour 3 présente une forme courbe et allongée. Elle comprend, à une extrémité, une première partie cylindrique 22 et, à son autre extrémité, une deuxième partie cylindrique 23 formée par deux tétons latéraux coaxiaux. Ces deux parties cylindriques 22, 23 sont parallèles à l'axe de pivotement du tambour 3.

Comme le montrent les figures, la partie 22 est destinée à coopérer avec les crans 19 du tambour 3 et subit l'action du ressort 6, qui la sollicite radialement vers l'intérieur du tambour 3. La came 4 constitue ainsi le cliquet précité. Les tétons de la partie 23 sont quant à eux engagés dans les lumières 14, le téton situé du côté du levier 7 étant en outre engagé, avec possibilité de pivotement et de coulissement, au travers d'une lumière 25 aménagée dans ce levier 7, décrite plus loin.

La pièce 20 comprend en outre, dans sa partie centrale et sur sa face interne, une série de nervures et de rainures transversales de section triangulaire, et présente une lumière 26 aménagée longitudinalement à travers elle, selon une direction perpendiculaire aux axes des parties 22 et 23. Cette lumière 26 a, sur le côté extérieur de la pièce 20, une largeur telle qu'elle peut recevoir à coulissement la tête de la vis 30 décrite ci-après, et, sur le côté intérieur de la pièce 20, une largeur inférieure à celle de cette tête mais supérieure à celle du corps de cette même vis 30, de sorte qu'elle peut recevoir ce corps à coulissement.

La pièce 21 située radialement vers l'intérieur par rapport au tambour 3 présente une largeur allant en augmentant vers l'une de ses extrémités longitudinales, la partie la plus large de cette pièce 21 constituant ladite zone de serrage 4a.

Sur son côté radialement externe, cette pièce 21 comprend une série de nervures et de rainures transversales de section triangulaire, propres à venir en prise, respectivement, avec les nervures et rainures précitées de la pièce 20, pour définir une pluralité de positions possibles de la pièce 21 par rapport à la pièce 20.

La pièce 21 présente également un trou taraudé, qui débouche dans sa face radialement externe, ce trou pouvant recevoir ladite vis 30 engagée au travers de la lumière 26. Le serrage de cette vis 30 permet de fixer les pièces 20 et 21 l'une par rapport à l'autre dans une position relative déterminée, la plus appropriée selon le diamètre du cordage 5 à bloquer.

En outre, la pièce 21 comprend des crans 27 aménagés au niveau de la zone 4a, dans son bord tourné vers le tambour 3, pour prendre appui contre ce cordage 5.

Le ressort 6 est du type "en épingle". Son enroulement central est engagé sur la base du téton de la partie 23 qui traverse la lumière 25 ; l'une de ses branches latérales porte contre la pièce 28 formant le pivot du levier 7 tandis que son autre branche latérale est recourbée du côté de son extrémité libre et est engagée autour de la came 4.

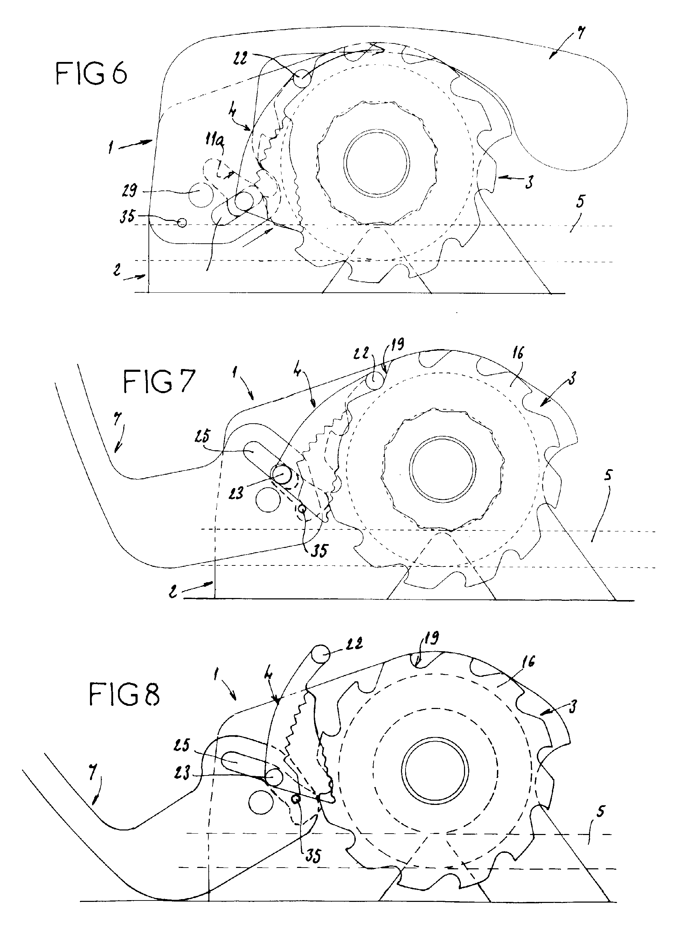

Le levier 7 est monté pivotant sur le bâti 2 entre les positions montrées aux figures 6 à 8, correspondant respectivement aux positions précitées de verrouillage, de déverrouillage intermédiaire et de déverrouillage total du dispositif 1.

Le levier 7 comprend, outre la lumière 25 précitée, un trou 29 recevant la pièce 28 formant son pivot, et un ergot 35 faisant saillie de sa face tournée vers la came 4. La longueur de cet ergot 35 est telle qu'il peut venir prendre appui, à partir de ladite position de déverrouillage intermédiaire et jusqu'à la position de déverrouillage total, contre la came 4.

En pratique, pour l'introduction d'un cordage 5 dans le dispositif 1, le levier 7 est amené dans la position de complet basculement montrée à la figure 8. Dans cette position, la lumière 25 écarte largement la partie 23, et donc la zone 4a, du tambour 3, et l'ergot 35 soulève la came 4 pour dégager la partie 22 des crans 19. Un large espace est ainsi défini entre la came 4 et le tambour 3, et ce tambour 3 peut tourner, de sorte que le cordage 5 peut être facilement engagé dans le dispositif 1 par le côté amont de celui-ci, puis être enroulé autour du tambour 3 dans un sens inverse des aiguilles d'une montre et ressortir du dispositif 1 par le côté aval de ce dernier.

Le levier 7 est ensuite placé dans la position intermédiaire montrée à la figure 7, dans laquelle l'ergot 35 ne soulève plus la came 4, de sorte que la partie 22 est amenée au niveau des crans 19 sous l'action du ressort 6. La lumière 25 reste distante du tambour 3 et maintient la partie 23, donc la zone 4a, à distance de ce tambour 3.

Il est alors possible à l'utilisateur de tirer sur le cordage 5 en aval du dispositif 1, à la main puis au moyen d'un cabestan, de manière à créer une tension sur le cordage 5 en amont du dispositif 1.

Le levier 7 est alors déplacé vers la position montrée à la figure 6. Durant ce déplacement, la partie 23 glisse le long des bords arrondis 11a des joues 11, ce qui assure le maintien de la partie 22 en prise avec le cran 19 correspondant, et la came 4 est amenée par la lumière 25 dans une position de contact avec le cordage 5, par pivotement autour de l'axe de la partie 22.

La tension exercée en aval est relâchée lorsque le levier 7 se trouve dans la position montrée à la figure 6. Du fait des frottements du cordage 5 sur les nervures 18, la tension exercée en amont sur le cordage 5 tend à faire pivoter le tambour 3 dans le sens des aiguilles d'une montre. Le tambour 3 tend alors, par l'intermédiaire de la partie 22 en prise avec l'un des crans 19, à entraîner la came 4 en déplacement curviligne dans le même sens de pivotement. La lumière 25 se trouve, dans cette position du levier 7, orientée de manière oblique par rapport au tambour 3, l'axe longitudinal de cette lumière 25 formant un angle d'environ 30° avec le fond 10 du bâti 2. Il résulte alors de la sollicitation précitée de la came 4 en déplacement curviligne et du coulissement de la partie 23 dans la lumière 25 ainsi orientée, que la came 4 est pressée vers une position de verrouillage, dans laquelle ses crans 27 viennent mordre dans le cordage 5 et immobiliser ce dernier.

Lorsqu'une tension est à nouveau exercée sur le cordage 5 en aval du dispositif 1 de manière à équilibrer ou à dépasser la tension amont, ladite sollicitation de la came 4 disparaît. Les lumières 14 et 25 permettent alors à la came 4 de s'effacer vers une position radiale extérieure de déverrouillage, dans laquelle elle permet le coulissement avec frottements du cordage 5 entre elle et le tambour 3.

Dès que la tension aval cesse, le pivotement du tambour 3 ramène la came 4 dans sa position de verrouillage.

Pour relâcher le cordage 5, le levier 7 est pivoté vers la position de déverrouillage intermédiaire montrée à la figure 7, ce qui éloigne la came 4 du cordage 5 sans dégagement de la partie 22 hors du cran 19. Le cordage 5 peut alors glisser autour du tambour 3, ce qui permet, compte tenu des frottements de ce cordage 5 sur les nervures 18, un largage contrôlé de ce cordage 5.

Le pivotement du levier 7 vers la position de déverrouillage total montrée à la figure 8 amène l'ergot 35 à soulever à nouveau la came 4 jusqu'à dégager la partie 22 d'avec le cran 19. La rotation du tambour 3 est alors libérée, ce qui permet un largage rapide du cordage 5.

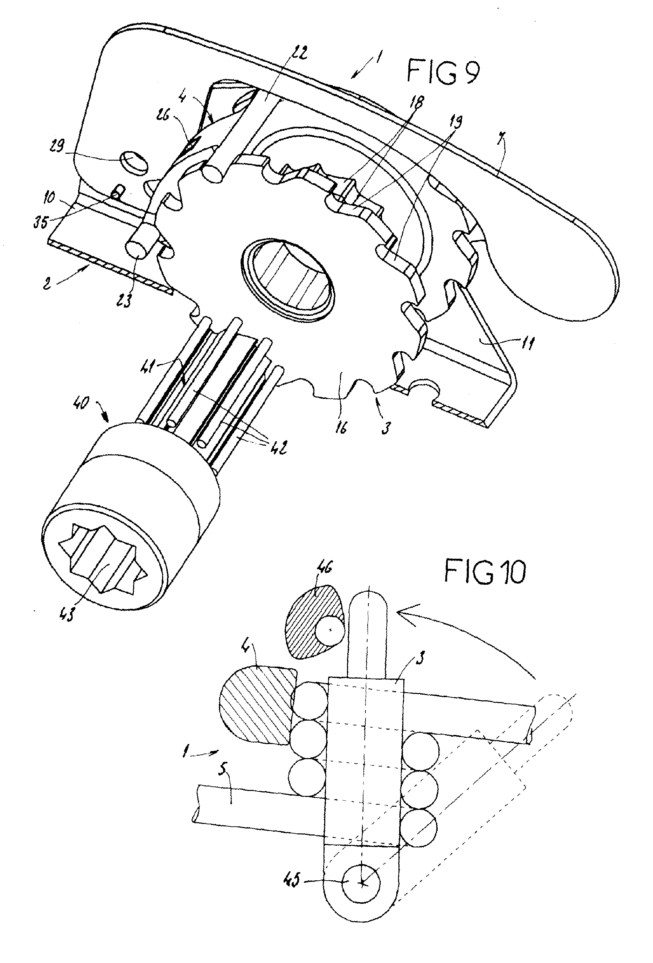

La figure 9 montre qu'en variante, la cavité 17, ainsi que la partie 41 de la pièce 40 formant le pivot du tambour 3 qui est destinée à être engagée dans cette cavité 17, peuvent être aménagées de manière à former un système, connu en soi, de cliquet à aiguilles 42. La pièce 40 comporte en outre une cavité 43 débouchant sur l'extérieur du bâti 2, propre à recevoir une manivelle de cabestan.

Le cordage 5 peut ainsi être mis en tension en entraînant le tambour 3 directement au moyen de cette manivelle.

La figure 10 montre une forme de réalisation très schématique et simplifiée du dispositif 1.

Dans ce cas, le dispositif 1 comprend une pièce cylindrique 3 autour de laquelle le cordage 5 est enroulé sur plusieurs tours, cette pièce 3 étant montée pivotante par une extrémité autour d'un pivot 45 d'axe perpendiculaire à celui de cette pièce 3 et du cordage 5. Une tension amont supérieure à une tension aval fait pivoter la pièce 3 autour de ce pivot 45 et presse des spires du cordage 5 contre une pièce 4 voisine, réalisant ainsi un serrage desdites spires. Une came pivotante 46 permet d'écarter la pièce 3 de la pièce 4 pour libérer le coulissement du cordage 5.

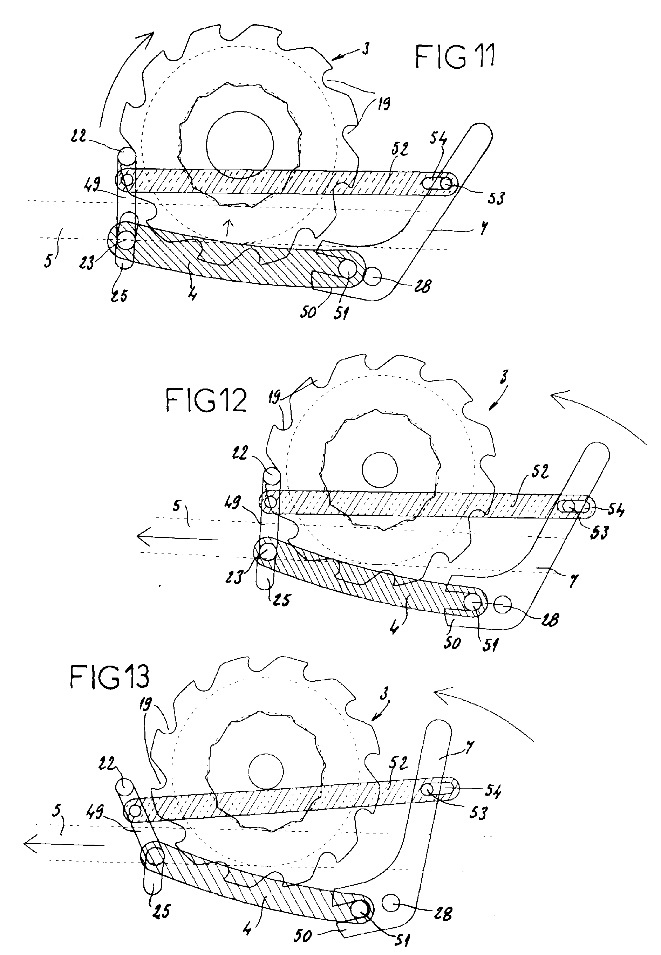

Dans la forme de réalisation montrée aux figures 11 à 13, le dispositif 1 comprend :
- une barrette 4 de serrage du cordage 5,
- un cliquet 49 comprenant une partie 22 qui vient en prise avec les crans 19 du tambour 3 et une partie 23, qui est engagée dans une lumière 25 et qui permet de relier de manière pivotante le cliquet 49 à une extrémité de la barrette 4,
- un levier pivotant 7 dont une partie 50 en forme de fourchette est engagée à pivotement autour d'un téton 51 aménagé dans l'autre extrémité de la barrette 4, et
- une tringle 52, qui relie le levier 7 et le cliquet 49, ce levier 7 comprenant un téton 53 engagé dans une lumière 54 de la tringle 52.

Dans la position de verrouillage montrée à la figure 11, le pivotement du tambour 3 dans le sens des aiguilles d'une montre sous l'effet de la tension amont entraîne en déplacement curviligne le cliquet 49, ce qui presse la barrette 4 en position de verrouillage ; la lumière 25 permet à cette barrette 4 de se déplacer vers sa position de déverrouillage en cas de tension aval au moins égale à la tension amont.

Dans la position de déverrouillage intermédiaire du dispositif 1 montrée à la figure 12, le levier 7 écarte l'extrémité aval de la barrette 4 à distance du cordage 5, ce qui permet le largage contrôlé de ce dernier. Le cliquet 49 reste en prise avec le cran 19 par le fait du coulissement du téton 53 dans la lumière 54.

Dans la position de déverrouillage total du dispositif 1 montrée à la figure 13, le téton 53 est venu en butée contre le levier 7, ce qui déplace la tringle 52 pour dégager la partie 22 du cliquet 49.

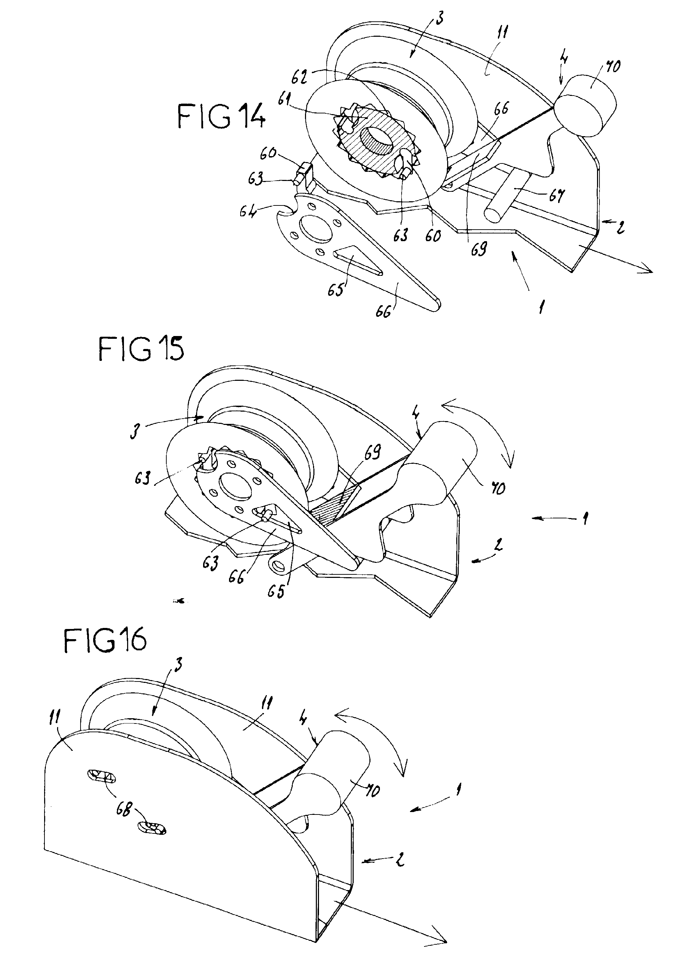

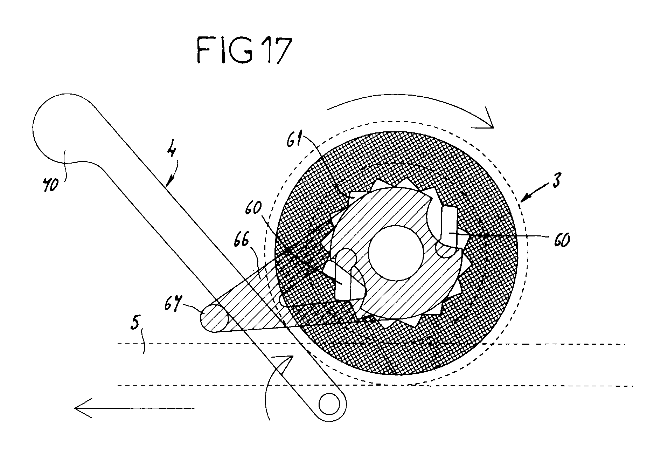

Le dispositif 1 montré aux figures 14 à 17 comprend un système composé de deux cliquets pivotants 60, d'un moyeu 61, et d'une denture interne formant des crans 62, qui est aménagée dans le tambour 3.

Les cliquets 60 présentent des parties arrondies, qui sont engagées et peuvent pivoter dans des encoches correspondantes aménagées dans le moyeu 61, et des parties latérales rectilignes, qui peuvent coopérer avec les crans 62. Ces cliquets 60 comportent des tétons axiaux 63 engagés au travers d'une encoche 64 et d'une lumière 65 qui sont aménagées dans un bras radial 66, ce bras 66 étant monté sur le moyeu 61, coaxialement à celui-ci. Le bras 66 est relié par un doigt transversal 67 à un bras 66 similaire situé de l'autre côté du tambour 3. Les tétons 63 sont également engagés au travers de lumières 68 aménagées dans l'une des joues 11. Une came de serrage 4 est montée pivotante sur le bâti 2, en dessous du tambour 3, cette came 4 reposant contre le doigt 67 et comportant une surface 69 de serrage du cordage 5 entre elle et ce tambour 3.

La tension amont tend à faire pivoter le moyeu 61, et donc les bras 66 et doigt 67, jusqu'à ce que ce dernier presse la came 4 vers une position radialement interne dans laquelle la surface 69 serre le cordage entre elle et le tambour 3. Le déblocage s'opère en agissant sur l'extrémité 70 de cette came 4 pour incliner manuellement cette came 4 vers le bas, afin de permettre le glissement du cordage ; les encoche 64 et lumière 65 sont telles que le bras 66 n'agit pas sur les tétons 63 au cours de ce mouvement, de sorte que les cliquets 60 restent en prise avec les crans 62. La poursuite de ladite inclinaison permet, à l'approche de la fin de course de cette inclinaison, par coopération des tétons 63 avec les bords des joues 11 délimitant les lumières 68, de faire pivoter les cliquets 60 vers l'intérieur du tambour 3, afin de libérer la rotation de ce dernier.

L'invention fournit ainsi un dispositif 1 bloqueur de cordage 5 qui remédie aux inconvénients des dispositifs homologues de la technique antérieure, puisque ce dispositif permet à la fois un largage facile et rapide du cordage 5 en toutes circonstances, sans obliger à l'exercice d'une tension du cordage 5 en aval du dispositif, un parfait blocage d'un cordage 5 en fibres à faible coefficient de friction, et une usure réduite du cordage 5.

Il va de soi que l'invention n'est pas limitée à la forme de réalisation décrite ci-dessus à titre d'exemple mais qu'elle en embrasse, au contraire, toutes les variantes de réalisation. Ainsi, le cordage 5 peut être enroulé sur une fraction de tour seulement, cette fraction correspondant toutefois au minimum à un angle de plus de 180°, auquel cas le tambour peut être remplacé par un simple réa ; le dispositif peut être fixé à une paroi par le fond 10 précité ou peut comprendre des trous dans l'une ou l'autre des joues 11 pour une fixation par cette joue ; les lumières 14 peuvent être remplacées par une paroi faisant saillie de la face interne de la joue 11, qui est conformée pour délimiter ladite surface de came 11a ; le levier 7 peut être constitué par un flasque unique, comme montré au dessin ou par deux flasques dont chacun est situé le long de l'une desdites joues 11, chacun de ces flasques comprenant alors une lumière 25 et une surface de came 11a, chaque téton 23 étant engagé dans cette lumière 25 et venant coopérer avec cette surface 11a ; le ressort 6 pourrait être de tout autre type, notamment hélicoïdal ; .

## Revendications

1. Dispositif (1) bloqueur de cordage (5), permettant, dans un état de verrouillage, de bloquer un cordage (5) subissant une tension en amont du dispositif (1) et, dans un état de déverrouillage, de libérer ce cordage (5) ; ce dispositif (1) comprend un premier et un second organes de serrage (3, 4) du cordage (5), entre lesquels ce cordage (5) est engagé, ledit premier organe de serrage (3) étant monté pivotant par rapport au dispositif (1) et comprenant une surface circulaire autour de laquelle le cordage (5) peut être engagé, et ledit deuxième organe de serrage (4) étant disposé par rapport audit premier organe de serrage (3) de manière à permettre ledit serrage du cordage (5) entre lui et ledit premier organe de serrage (3), au moins un de ces organes (3, 4) étant mobile entre une position de verrouillage, dans laquelle il serre le cordage (5) entre lui et l'autre organe (4, 3), et une position de déverrouillage, dans laquelle il n'exerce pas ledit serrage afin d'autoriser le défilement du cordage (5) au travers du dispositif (1) ;
dispositif (1) caractérisé
- en ce qu'il est conformé de telle sorte que le cordage (5) puisse être enroulé autour dudit premier organe de serrage (3) sur une fraction de tour correspondant à un angle de plus de 180°, ou sur plusieurs tours, et
- en ce que ledit deuxième organe de serrage (4) est disposé par rapport audit premier organe de serrage (3) de telle sorte que le serrage du cordage (5) qu'il permet s'effectue au-delà d'une fraction de tour du cordage (5) sur ledit premier organe de serrage (3) correspondant à un angle au moins égal à 180°, ou au-delà d'un enroulement du cordage (5) sur plusieurs tours autour dudit premier organe de serrage (3).

2. Dispositif selon la revendication 1, caractérisé en ce qu'il comprend à la fois :
- des moyens de manoeuvre (7, 46, 70) à actionnement manuel pour amener le ou les organes de serrage mobiles (3, 4) vers leur position de déverrouillage, ces moyens de manoeuvre (7) permettant de libérer le défilement du cordage (5) ; et
- des moyens (19, 22, 23, 25 ; 45 ; 49 ; 61 à 67) permettant le déplacement automatique du ou des organes de serrage mobiles (3, 4) vers ladite position de verrouillage en cas de tension amont supérieure à la tension aval, et le déplacement automatique de ces mêmes organes vers ladite position de déverrouillage en cas de tension aval au moins égale à la tension amont.

3. Dispositif selon la revendication 2, caractérisé en ce que le deuxième organe de serrage (4) est mobile et est constitué par une came pivotante, cette came pouvant pivoter dans un sens pour venir en prise avec le cordage (5), lorsque la tension amont est supérieure à la tension aval, et pouvant pivoter dans le sens inverse pour libérer le cordage (5), lorsque la tension exercée en aval est au moins égale à la tension exercée en amont.

4. Dispositif selon la revendication 2, caractérisé en ce que ledit premier organe de serrage (3) est déplaçable en direction du deuxième organe de serrage (4) lorsque la tension amont est supérieure à la tension aval, et est déplaçable en direction opposée à ce deuxième organe de serrage (4) lorsque la tension exercée en aval est au moins égale à la tension exercée en amont.

5. Dispositif selon l'une des revendications 1 à 4, caractérisé en ce que le premier organe de serrage est un cylindre transversal (3).

6. Dispositif selon l'une des revendications 1 à 4, caractérisé en ce que le premier organe de serrage est constitué par un tambour (3) monté pivotant sur un axe.

7. Dispositif selon la revendication 6, caractérisé en ce qu'il comprend des moyens libérables (22, 19 ; 49 ; 60, 62) de blocage de la rotation du tambour (3) dans le sens de rotation de ce tambour (3) correspondant à l'exercice sur le cordage (5) d'une tension en amont du dispositif (1) supérieure à la tension aval.

8. Dispositif selon la revendication 7, caractérisé en ce que lesdits moyens libérables sont constitués par un système de cliquet (22, 49, 60) relié au dispositif (1) et de crans (19, 62) correspondants aménagés sur le tambour (3).

9. Dispositif selon la revendication 8, caractérisé en ce qu'il comprend des moyens de manoeuvre (7, 70) à actionnement manuel, conformés pour permettre
dans une position de verrouillage du dispositif (1), de bloquer le cordage (5) en cas de tension amont supérieure à la tension aval,
dans une position de déverrouillage intermédiaire du dispositif (1), de déplacer ledit deuxième organe de serrage (4) vers sa position de déverrouillage tout en maintenant lesdits moyens libérables (22, 19 ; 60, 62) de blocage de la rotation du tambour (3) dans une position active, dans laquelle ils bloquent cette rotation, et
dans une position de déverrouillage total du dispositif (1), de maintenir le deuxième organe de serrage (4) dans sa position de déverrouillage et de déplacer lesdits moyens libérables (22, 19 ; 60, 62) de blocage de la rotation du tambour dans une position inactive, dans laquelle ils libèrent cette rotation.

10. Dispositif selon la revendication 8 ou la revendication 9, caractérisé en ce que le deuxième organe de serrage (4) comprend, à distance de sa zone de serrage (4a) destinée à venir au contact du cordage (5), une première partie cylindrique (22), parallèle à l'axe du tambour (3), formant ledit cliquet, et, du côté de cette zone de serrage (4a), une deuxième partie cylindrique (23), également parallèle audit axe ; cette deuxième partie cylindrique (23) est engagée, avec possibilité de pivotement et de coulissement, dans une lumière (25) ; cette lumière (25) est orientée de manière à ce que le déplacement de ladite deuxième partie cylindrique (23) en elle fasse pivoter le deuxième organe de serrage (4) autour de l'axe de ladite première partie cylindrique (22), pour amener ladite zone de serrage (4a) à serrer le cordage (5), lorsque le deuxième organe de serrage (4) est entraîné en déplacement curviligne par le tambour (3), par l'intermédiaire de ladite première partie cylindrique (22) en prise avec l'un des crans (19) du tambour (3), suite à l'exercice sur le cordage (5) d'une tension amont supérieure à la tension aval.

11. Dispositif selon la revendication 10, caractérisé
- en ce qu'il comprend un bâti (2) sur lequel un levier (7) est monté de manière pivotante, ce levier (7) étant mobile entre une position de verrouillage, une position de déverrouillage intermédiaire, et une position de déverrouillage total correspondant aux positions précitées de verrouillage, de déverrouillage intermédiaire, et de déverrouillage total du dispositif (1) ;
- en ce que ladite lumière (25) est aménagée dans ce levier (7), et permet le déplacement dudit deuxième organe de serrage (4) lorsque le levier (7) est placé dans ladite position de verrouillage tandis qu'elle est éloignée du tambour (3) lorsque le levier (7) est pivoté vers ladite position de déverrouillage intermédiaire ;
- en ce que le bâti (2) comprend une surface de came (11a), contre laquelle ladite deuxième partie cylindrique (23) vient porter lors du pivotement du levier (7) vers la position de déverrouillage intermédiaire ; cette surface de came (11a) présente une forme courbe et ladite deuxième partie cylindrique (23) coopère avec elle de manière à faire pivoter le deuxième organe de serrage (4) autour de ladite première partie cylindrique tout en maintenant cette première partie cylindrique (22) en prise avec le cran (19) correspondant du tambour (3) ; et
- en ce que le levier (7) comprend un ergot (35) venant porter contre le deuxième organe de serrage (4) lorsque ce levier (7) est déplacé vers ladite position de déverrouillage total, afin de dégager ladite première partie cylindrique (22) hors du cran (19) correspondant du tambour (3).

12. Dispositif selon l'une des revendications 1 à 11, caractérisé en ce que le premier organe de serrage (3) comprend des nervures (18) faisant saillie, radialement vers l'extérieur, de sa face périphérique extérieure, ces nervures (18) permettant d'augmenter les frottements entre le cordage (5) et ce premier organe de serrage (3).

13. Dispositif selon la revendication 10 ou la revendication 11, caractérisé en ce que le deuxième organe de serrage (4) est formé par l'assemblage de deux pièces (20, 21), dont une (20) comporte lesdites première et deuxième parties cylindriques (22, 23) et dont l'autre comporte ladite zone de serrage (4a) du cordage (5), des moyens (26, 30) étant prévus pour permettre de placer l'une de ces pièces (20, 21) par rapport à l'autre selon plusieurs positions longitudinales et pour maintenir ces pièces (20, 21) dans une position déterminée.

14. Dispositif selon l'une des revendications 6 à 13, caractérisé en ce que le moyeu (15) du tambour (3) comprend une cavité axiale (17) présentant un profil non circulaire, qui débouche sur l'extérieur du dispositif (1), cette cavité (17) pouvant recevoir des moyens (40 à 43) pour permettre d'entraîner manuellement en rotation ce tambour (3) afin de réaliser la mise en tension totale ou partielle du cordage (5).

15. Dispositif selon la revendication 14, caractérisé en ce que lesdits moyens (40 à 43) pour permettre d'entraîner manuellement en rotation le tambour (3) comprennent un système à cliquet, tel qu'un système de cliquet à aiguilles (42), et une manivelle d'entraînement, en particulier une manivelle de cabestan.
